# EUROPEAN PATENT APPLICATION

(11) **EP 4 335 741 A1**
(43) Date of publication of application: **13.03.2024**
(21) Application number: 22811066.4
(22) Date of filing: 18.04.2022
(51) Int. Cl.: B63H 21/38, B63H 21/32, C01C 1/12

(54) **SHIP**

(30) Priority: 24.05.2021 JP 2021086837
(71) Applicant: Mitsubishi Shipbuilding Co., Ltd., Yokohama-shi Kanagawa 220-8401 (JP)
(72) Inventor: YAMADA Daisuke, Yokohama-shi, Kanagawa 220-8401 (JP)
(74) Representative: Studio Torta S.p.A.
(86) International application number: PCT/JP2022/017995
(87) International publication number: WO 2022/249792

(57) **Abstract**

A ship includes: a combustion device discharging an exhaust gas with burning fuel; an ammonia recovery unit recovering ammonia absorbed into water as recovered ammonia water; a recovered ammonia water tank storing the recovered ammonia water recovered by the ammonia recovery unit; a denitrification device performing a denitrification process on the exhaust gas discharged from the combustion device; a denitrified ammonia water tank storing denitrified ammonia water used as a catalyst in the denitrification device; and a recovered ammonia water supply line supplying the recovered ammonia water of the recovered ammonia water tank to the denitrified ammonia water tank.

## Description

### Technical Field

The present disclosure relates to a ship.

Priority is claimed on Japanese Patent Application No. 2021-086837, filed May 24, 2021, the content of which is incorporated herein by reference.

### Background Art

Ships equipped with fuel for propelling ships or combustible gas as cargo are provided with vent posts to discharge a combustible gas into the atmosphere outside the ships. For example, Patent Document 1 discloses a configuration in which a combustible gas remaining in a pipe or the like of a gas engine driven by a combustible gas (gas fuel) is purged by a nitrogen gas or the like to be released into the atmosphere through a vent post.

The above-described ship is being considered to be equipped with ammonia as gas fuel. Ammonia may not diffuse sufficiently even if the ammonia is purged with an inert gas and released into the atmosphere through the vent post. One of the reasons why ammonia is less likely to diffuse into the atmosphere is that ammonia easily reacts with moisture in air compared to other combustible gases such as a methane gas and a butane gas, reacts with moisture in the air to form ammonia water in the form of mist (droplets), and then has a higher specific gravity than the air.

On the other hand, Patent Document 2 discloses a recovery device that recovers ammonia from an exhaust gas. The recovery device disclosed in Patent Document 2 includes a dissolution tank which dissolves an exhaust gas in water and an ammonia water tank which stores ammonia water formed by the dissolution tank. Then, in the recovery device of Patent Document 2, ammonia water stored in the ammonia water tank is distilled and an ammonia gas obtained by this distillation is dehumidified and liquefied to generate high-purity ammonia.

### Citation List

### Patent Document

Patent Document 1: Japanese Unexamined Patent Application, First Publication No. 2013-11332
Patent Document 2: Japanese Unexamined Patent Application, First Publication No. 2008-7378

### Summary of Invention

### Technical Problem

However, since it is necessary to separately secure an installation space within the hull in order to apply the recovery device of Patent Document 2 to the ship, there is a problem that the hull increases in size.

Further, since the water returned to a dissolution device of Patent Document 2 contains a small amount of ammonia, water from which ammonia has been separated cannot be released to the outside of the ship for reasons such as preventing marine pollution. For example, if the amount of the ammonia water in the ammonia water tank exceeds an upper limit, it is necessary to neutralize or dilute the ammonia contained in the water before the ammonia is discharged to the outside of the ship. As a result, there is a problem in that separate devices for neutralization and dilution are required.

The present disclosure has been made to solve the above-described problems and an object thereof is to provide a ship capable of suppressing recovered ammonia from being discharged to the outside of the ship and suppressing an increase in size of a hull by reusing the recovered ammonia while recovering ammonia as ammonia water.

### Solution to Problem

In order to solve the above-described problems, a ship of the present disclosure includes: a combustion device discharging exhaust gas with burning fuel; an ammonia recovery unit recovering ammonia absorbed into water as recovered ammonia water; a recovered ammonia water tank storing the recovered ammonia water recovered by the ammonia recovery unit; a denitrification device performing a denitrification process on the exhaust gas discharged from the combustion device; a denitrified ammonia water tank storing denitrified ammonia water used as a reducing agent in the denitrification device; and a recovered ammonia water supply line supplying the recovered ammonia water of the recovered ammonia water tank to the denitrified ammonia water tank.

### Advantageous Effects of Invention

According to the ship of the present disclosure, it is possible to suppress the recovered ammonia from being discharged to the outside of the ship and to suppress an increase in size of the hull by reusing the recovered ammonia while recovering the ammonia as the ammonia water.

### Brief Description of Drawings

FIG. 1 is a side view of a ship according to an embodiment of the present disclosure.
FIG. 2 is a diagram showing a piping system that performs fuel purge of the ship according to the embodiment of the present disclosure.
FIG. 3 is a diagram showing a piping system around a denitrified ammonia water tank of a denitrification device according to the embodiment of the present disclosure.

### Description of Embodiments

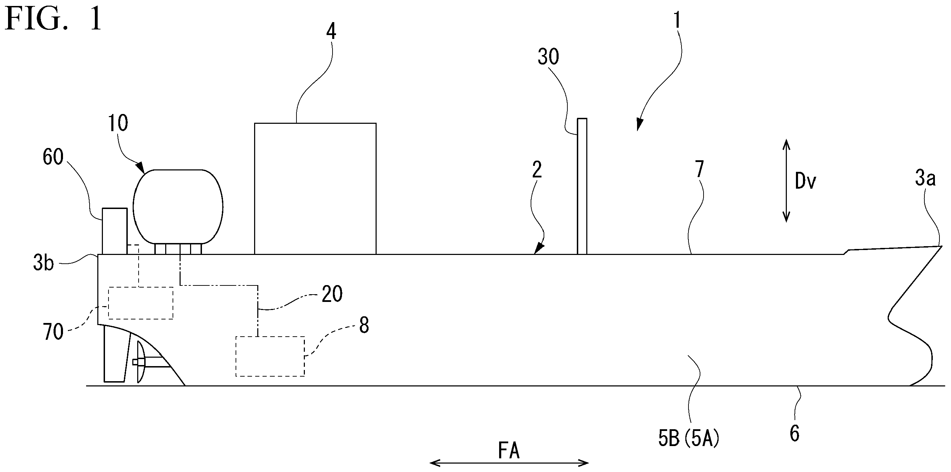

Hereinafter, a ship according to an embodiment of the present disclosure will be described with reference to the drawings. FIG. 1 is a side view of the ship according to the embodiment of the present disclosure.

### (Configuration of ship)

As shown in FIG. 1, a ship 1 of this embodiment includes a hull 2, a superstructure 4, a combustion device 8, an ammonia tank 10, a piping system 20, a vent post 30, an ammonia recovery unit 60, and a recovered ammonia water tank 70. The type of ship 1 is not limited to a specific type. Examples of the type of ship 1 include a liquefied gas carrier, a ferry, a RORO ship, a car carrier, a passenger ship, and the like.

The hull 2 includes a pair of sides 5A and 5B and a bottom 6 forming its outer shell. The sides 5A and 5B are provided with a pair of shell plates respectively forming the port and starboard sides. The bottom 6 includes a bottom shell plate that connects these sides 5A and 5B. Due to the pair of sides 5A and 5B and the bottom 6, the outer shell of the hull 2 is formed in a U shape in a cross-section orthogonal to the bow and stern direction FA.

The hull 2 further includes an upper deck 7 that is a full deck located at the uppermost level. The superstructure 4 is formed on this upper deck 7. Living areas and the like are provided inside the superstructure 4. In the ship 1 of this embodiment, for example, a cargo space (not shown) for loading cargo is provided in the hull 2 closer to a bow 3a in the bow and stern direction FA than the superstructure 4 and below the upper deck 7.

The combustion device 8 is a device that generates thermal energy by burning fuel and is provided inside the above-described hull 2. Examples of the combustion device 8 include an internal combustion engine which is used as a main engine for propelling the ship 1, an internal combustion engine which is used as a generator for supplying electricity inside the ship, a boiler which generates steam as a working fluid, and the like. The combustion device 8 of this embodiment uses ammonia (hereinafter, referred to as fuel ammonia) as fuel.

The ammonia tank 10 stores liquefied ammonia as fuel ammonia. The ammonia tank 10 illustrated in this embodiment is installed on the upper deck 7 closer to the stern 3b than the superstructure 4, but the arrangement of the ammonia tank 10 is not limited to the upper deck 7 closer to the stern 3b than the superstructure 4.

The piping system 20 connects the combustion device 8 and the ammonia tank 10. The piping system 20 supplies fuel ammonia stored in the ammonia tank 10 to the combustion device 8.

For example, the vent post 30 guides a gas such as a vent gas discharged from the cargo tank upward from the upper deck 7 and releases the gas into the atmosphere. The vent post 30 of this embodiment is provided on the upper deck 7 and extends upward from the upper deck 7. The vent post 30 has a cylindrical shape extending in the up to down direction Dv and is open at the top.

The ammonia recovery unit 60 absorbs ammonia to be recovered into water and recovers the ammonia as the recovered ammonia water. The ammonia recovery unit 60 of this embodiment is disposed on the upper deck 7 closer to the stern 3b than the ammonia tank 10. As the ammonia recovery unit 60, for example, a so-called scrubber that injects water into a gas containing ammonia to absorb ammonia into water can be used. Water (for example, fresh water) stored in a water tank (not shown) provided inside the hull 2 is supplied to this ammonia recovery unit 60. Additionally, the ammonia recovery unit 60 is not limited to the above configuration or arrangement if the ammonia can be absorbed into water and recovered as the recovered ammonia water.

The recovered ammonia water tank 70 stores the recovered ammonia water recovered by the ammonia recovery unit 60. The recovered ammonia water tank 70 of this embodiment is disposed inside the hull 2 below the upper deck 7 on which the ammonia recovery unit 60 is installed. Additionally, the recovered ammonia water tank 70 is not limited to the above arrangement if the ammonia recovered by the ammonia recovery unit 60 can be recovered as the recovered ammonia water.

### (Configuration of piping system related to purge)

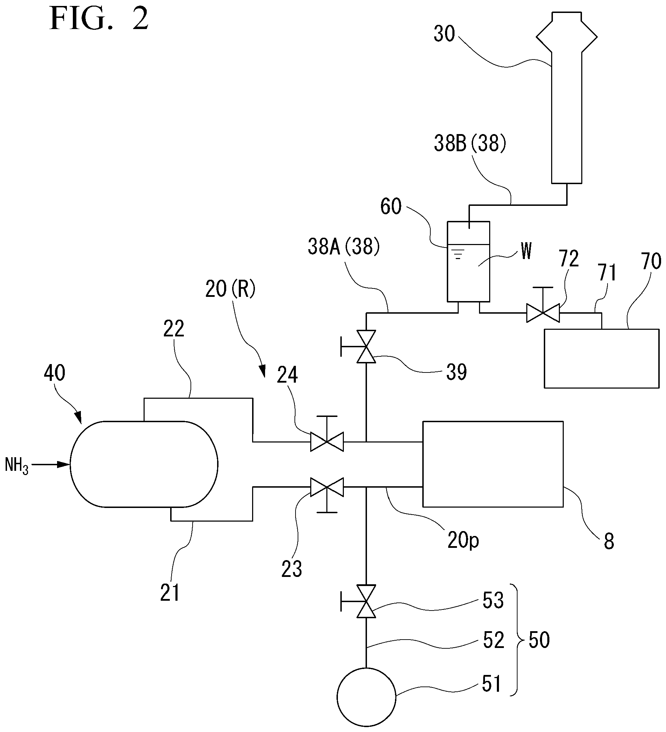

FIG. 2 is a diagram showing a piping system that performs fuel purge of the ship according to the embodiment of the present disclosure.

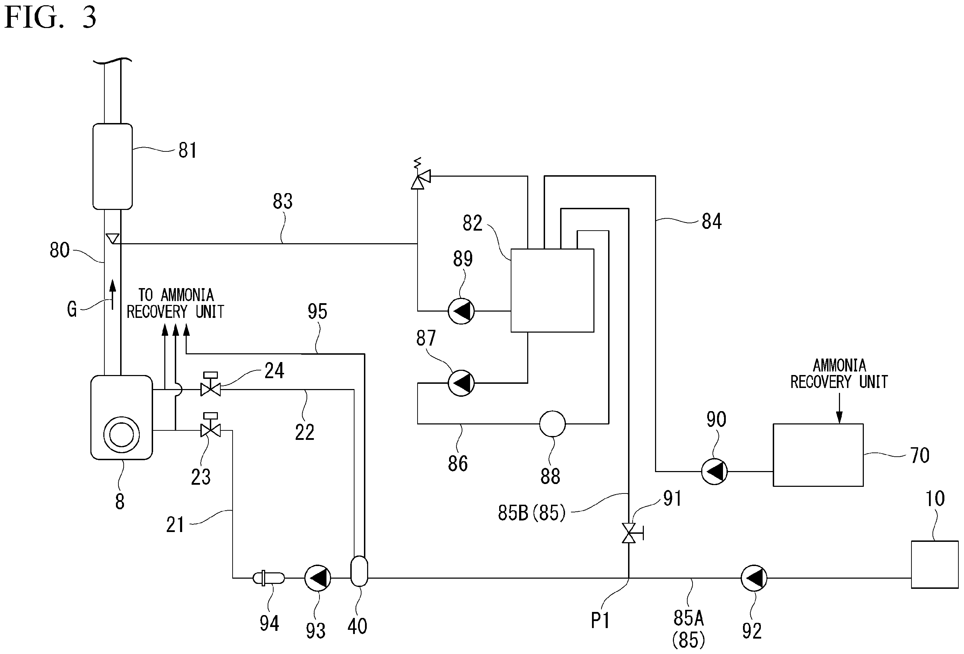

As shown in FIG. 2, the ship 1 of this embodiment includes an ammonia buffer tank 40 which temporarily stores the fuel ammonia supplied from the ammonia tank 10. The ammonia buffer tank 40 is installed in the middle of the piping system 20 between the ammonia tank 10 and the combustion device 8. Each piping system 20 includes a fuel ammonia supply line 85 (see FIG. 3), a supply pipe 21, a return pipe 22, and opening and closing valves 23 and 24 to be described later. Each of an inert gas supply device 50 and the ammonia recovery unit 60 is connected to the piping system 20.

The supply pipe 21 and the return pipe 22 respectively connect the ammonia buffer tank 40 and the combustion device 8. The supply pipe 21 supplies the fuel ammonia from the ammonia buffer tank 40 to the combustion device 8. The return pipe 22 returns excess fuel ammonia not used as fuel in the combustion device 8 to the ammonia buffer tank 40. Additionally, the supply pipe 21 is provided with an ammonia pressurizing pump 93 and an ammonia heat exchanger 94 (see FIG. 3) to be described later, but they are not shown in FIG. 2.

The opening and closing valve 23 is provided in the supply pipe 21. The opening and closing valve 24 is provided in the return pipe 22. These opening and closing valves 23 and 24 are always kept in an open state when the combustion device 8 is operated. On the other hand, the opening and closing valves 23 and 24 are always kept in a closed state when the combustion device 8 is stopped. When these opening and closing valves 23 and 24 are closed, the flow paths formed inside the supply pipe 21 and the return pipe 22 are blocked.

The inert gas supply device 50 performs so-called purge of replacing the fuel ammonia of the flow route R through which the fuel ammonia as the fuel of the combustion device 8 flows with an inert gas such as dry nitrogen. The inert gas supply device 50 includes an inert gas supply unit 51, an inert gas supply pipe 52, and an inert gas supply valve 53. As the inert gas, for example, an inert gas generated inside the hull 2 by an inert gas generator (not shown) or an inert gas stored in advance in an inert gas tank (not shown) provided in the hull 2 can be used. Additionally, the inert gas may be any gas that does not undergo a chemical reaction when the inert gas comes into contact with the fuel ammonia.

The inert gas supply unit 51 supplies an inert gas to the inert gas supply pipe 52.

The inert gas supply pipe 52 connects the inert gas supply unit 51 and the flow route R. More specifically, the inert gas supply pipe 52 connects the inert gas supply unit 51 and a purge target region 20p of the flow route R. The purge target region 20p of this embodiment is the flow route R formed inside the supply pipe 21 closer to the combustion device 8 than the opening and closing valve 23, the return pipe 22 closer to the combustion device 8 than the opening and closing valve 24, and the combustion device 8. The inert gas supply pipe 52 illustrated in this embodiment is connected to the purge target region 20p of the supply pipe 21 in the purge target region 20p.

The inert gas supply valve 53 is provided in the inert gas supply pipe 52. The inert gas supply valve 53 is normally closed and blocks the supply of the inert gas from the inert gas supply unit 51 to the purge target region 20p. Here, the normal time is when the fuel ammonia can be supplied to the combustion device 8 such as when the combustion device 8 is operated. In the normal state, the opening and closing valves 23 and 24 are opened, the fuel ammonia can be supplied from the ammonia buffer tank 40 to the combustion device 8 through the supply pipe 21, and excess fuel ammonia is returned from the combustion device 8 to the ammonia buffer tank 40.

The inert gas supply valve 53 is changed from a closed state to an open state when switching the fuel of the combustion device 8 or during an emergency stop. In other words, the closed state is switched to the open state when purging the fuel ammonia remaining in the purge target region 20p. When performing such a purge, the opening and closing valve 23 is first closed to block the supply pipe 21. Accordingly, the supply of the fuel ammonia from the ammonia buffer tank 40 to the combustion device 8 is stopped. Next, when the inert gas supply valve 53 is switched from the closed state to the open state, the inert gas can be supplied from the inert gas supply unit 51 to the purge target region 20p. Then, when the inert gas is supplied from the inert gas supply unit 51, the fuel ammonia in the pipe of the purge target region 20p is pushed out toward the ammonia buffer tank 40 by the inert gas and the liquid fuel ammonia is recovered into the ammonia buffer tank 40. Then, the opening and closing valve 24 is closed to block the return pipe 22. Accordingly, the inert gas and the fuel ammonia remaining in the flow route R are guided to the vent pipe 38. Here, the opening and closing valve 24 is closed when most of the remaining fuel ammonia is recovered into the ammonia buffer tank 40. For example, the occurrence of such a state can be detected using various sensors, timers, and the like. Additionally, a case has been described in which the remaining fuel ammonia is recovered into the ammonia buffer tank 40, but the present disclosure is not limited to this configuration. For example, the inert gas may be supplied by the inert gas supply unit 51 after the opening and closing valves 23 and 24 are simultaneously closed to block the supply pipe 21 and the return pipe 22 at the same time.

The vent pipe 38 guides the fuel ammonia remaining in the flow route R to the outside together with the inert gas supplied by the inert gas supply device 50. Since the fuel ammonia flows out to the vent pipe 38 together with the inert gas, the fuel ammonia in the purge target region 20p (flow route R) is replaced with the inert gas.

The vent pipe 38 of this embodiment includes an upstream vent pipe 38A and a downstream vent pipe 38B. The upstream vent pipe 38A connects the purge target region 20p of the recovery pipe 71 (flow route R) and the ammonia recovery unit 60. The upstream vent pipe 38A illustrated in this embodiment is connected to the return pipe 22. The downstream vent pipe 38B connects the ammonia recovery unit 60 and the vent post 30. That is, a mixed fluid of the inert gas and the fuel ammonia flows through the upstream vent pipe 38A and the remaining fluid from which the fuel ammonia is recovered by the ammonia recovery unit 60 flows through the downstream vent pipe 38B.

The ammonia recovery unit 60 of this embodiment is connected to the recovered ammonia water tank 70 through the recovery pipe 71. This recovery pipe 71 is provided with a recovery pipe opening and closing valve 72. The ammonia water generated in the ammonia recovery unit 60 moves to the recovered ammonia water tank 70 through the recovery pipe 71 when the recovery pipe opening and closing valve 72 is opened. In this embodiment, since the recovered ammonia water tank 70 is disposed below the ammonia recovery unit 60, the ammonia water generated by the ammonia recovery unit 60 can flow down to the recovered ammonia water tank 70 due to the own weight.

### (Configuration around denitrification device)

FIG. 3 is a diagram showing a piping system around a denitrified ammonia water tank of a denitrification device according to the embodiment of the present disclosure.

As shown in FIG. 3, the ship 1 of this embodiment further includes an exhaust pipe 80, a denitrification device 81, a denitrified ammonia water tank 82, a denitrified ammonia water supply line 83, a recovered ammonia water supply line 84, and the fuel ammonia supply line 85.

The exhaust pipe 80 guides an exhaust gas G discharged from the combustion device 8 to the outside of the hull 2. The exhaust gas G, flowing through the exhaust pipe 80, immediately after discharged from the combustion device 8 contains nitrogen oxides.

The denitrification device 81 performs a denitrification process on the exhaust gas G discharged from the combustion device 8. This denitrification device 81 is a selective catalytic reduction denitrification device (SCR) which converts nitrogen oxides into nitrogen and water using a catalyst. This denitrification device 81 is provided in the middle of the exhaust pipe 80 and brings the exhaust gas G sprayed with the denitrified ammonia water into contact with a catalyst (not shown). Additionally, the exhaust gas G subjected to the denitrification process is released into the atmosphere through, for example, a funnel (not shown) provided in the hull 2.

The denitrified ammonia water tank 82 stores the denitrified ammonia water used in the denitrification device 81. Here, the denitrified ammonia water is ammonia water adjusted to a predetermined ammonia concentration (for example, several tens of percent) necessary for use as a reducing agent in the denitrification device 81. The denitrified ammonia water tank 82 of this embodiment includes a circulation pipe 86 and a stirring pump 87 for mixing the denitrified ammonia water. Furthermore, the circulation pipe 86 is provided with a concentration meter 88 for measuring the ammonia concentration of the denitrified ammonia water stored in the denitrified ammonia water tank 82. Additionally, the denitrified ammonia water tank 82 may be provided with a water level gauge or the like so that the storage amount of the denitrified ammonia water can be measured. Additionally, the circulation pipe 86 and the stirring pump 87 may not be provided and a different type of stirring device may be provided in the denitrified ammonia water tank 82. Further, the configuration for stirring the denitrified ammonia water as described above may be provided as necessary and may be, for example, omitted. In that case, the concentration meter 88 for measuring the ammonia concentration of the denitrified ammonia water may be provided in the denitrified ammonia water tank 82.

The denitrified ammonia water supply line 83 forms a flow path through which the denitrified ammonia water stored in the denitrified ammonia water tank 82 is supplied to the denitrification device 81. This denitrified ammonia water supply line 83 is provided with a denitrified ammonia water pump 89.

The recovered ammonia water supply line 84 forms a flow path through which the recovered ammonia water of the recovered ammonia water tank 70 is supplied to the denitrified ammonia water tank 82. This recovered ammonia water supply line 84 is provided with a recovered ammonia water pump 90. Here, the ammonia concentration of the recovered ammonia water stored in the recovered ammonia water tank 70 is lower than the ammonia concentration of the denitrified ammonia water described above (for example, several ppm to several percent).

The fuel ammonia supply line 85 includes a first line 85A which supplies the fuel ammonia stored in the ammonia tank 10 to the ammonia buffer tank 40 and a second line 85B which supplies the fuel ammonia stored in the ammonia tank 10 to the denitrified ammonia water tank 82. As described above, the fuel ammonia is liquefied ammonia. Therefore, the ammonia concentration of the fuel ammonia is higher than the ammonia concentration of the recovered ammonia water. Additionally, a case is illustrated in which the second line 85B of this embodiment is branch-connected to the first line 85A, but the second line 85B may connect, for example, the ammonia tank 10 and the denitrified ammonia water tank 82 if the fuel ammonia can be supplied to the denitrified ammonia water tank 82.

The second line 85B of this embodiment is provided with a flow rate adjustment valve 91 which can adjust the flow rate of the fuel ammonia flowing from the first line 85A into the second line 85B. This flow rate adjustment valve 91 can gradually adjust the valve opening degree from a fully closed state to a fully open state. The valve opening degree of the flow rate adjustment valve 91 may be manually operated by a worker, but may be automatically adjusted by a control device (not shown) on the basis of, for example, the ammonia concentration measurement result of the concentration meter 88.

The first line 85A of this embodiment is provided with a feed pump 92 which is provided closer to the ammonia tank 10 than a branch point P1 of the second line 85B to feed the fuel ammonia toward the combustion device 8. In other words, the second line 85B illustrated in this embodiment branches from the first line 85A between the feed pump 92 and the ammonia buffer tank 40. Additionally, the second line 85B may be provided with a pump which feeds the fuel ammonia toward the denitrified ammonia water tank 82.

Further, the supply pipe 21 of this embodiment is provided with the ammonia pressurizing pump 93 and the ammonia heat exchanger 94 which are not shown in FIG. 2. The ammonia pressurizing pump 93 pressurizes the fuel ammonia supplied from the ammonia buffer tank 40 to the combustion device 8. The ammonia heat exchanger 94 adjusts the temperature of the fuel ammonia pressurized by the ammonia pressurizing pump 93. Additionally, the ammonia buffer tank 40 and the ammonia recovery unit 60 of this embodiment are connected by a buffer tank vent pipe 95 and are able to supply a vent gas of the ammonia buffer tank 40 to the ammonia recovery unit 60. Accordingly, the ammonia contained in the vent gas of the ammonia buffer tank 40 can also recovered in the ammonia recovery unit 60.

### (Operation and effect)

The ship 1 of the above-described embodiment includes the combustion device 8 which discharges the exhaust gas G by burning fuel, the ammonia recovery unit 60 which absorbs ammonia into water and recovers the ammonia as recovered ammonia water, the recovered ammonia water tank 70 which stores the recovered ammonia water recovered by the ammonia recovery unit 60, the denitrification device 81 which performs a denitrification process on the exhaust gas G discharged from the combustion device 8, the denitrified ammonia water tank 82 which stores the denitrified ammonia water used as a reducing agent of the denitrification device 81, and the recovered ammonia water supply line 84 which supplies the recovered ammonia water of the recovered ammonia water tank 70 to the denitrified ammonia water tank 82.

According to such a ship 1, the recovered ammonia water which is recovered by the ammonia recovery unit 60 can be supplied to the denitrified ammonia water tank 82 by the recovered ammonia water supply line 84. Therefore, the denitrified ammonia water is generated using the recovered ammonia water in the denitrified ammonia water tank 82 and the denitrified ammonia water of this denitrified ammonia water tank 82 can be used as a reducing agent of the denitrification device 81. Accordingly, since the recovered ammonia water can be effectively used, facilities for processing the recovered ammonia water are not required and an increase in size of the hull 2 can be suppressed while recovering the ammonia as the ammonia water.

The ship 1 of the above-described embodiment further includes the ammonia tank 10 which stores fuel ammonia as fuel of the combustion device 8 and the fuel ammonia supply line 85 which supplies the fuel ammonia of the ammonia tank 10 to the denitrified ammonia water tank 82.

Thus, it is possible to generate the denitrified ammonia water having a higher ammonia concentration than the recovered ammonia water by mixing the fuel ammonia having a higher ammonia concentration than the denitrified ammonia water with the recovered ammonia water supplied to the denitrified ammonia water tank 82.

The combustion device 8 of the ship 1 of the above-described embodiment is a main engine that propels the hull 2 and the ship 1 includes the inert gas supply device 50 which supplies an inert gas to the flow route through which the fuel of the main engine flows and purges the fuel ammonia remaining in the flow route. Then, the ammonia recovery unit 60 absorbs the purged fuel ammonia into water and recovers the fuel ammonia as the recovered ammonia water.

That is, when the ship 1 is a so-called ammonia-fueled ship that navigates using ammonia as fuel, the fuel ammonia remaining the flow route R can be purged and recovered as recovered ammonia water by the ammonia recovery unit 60. Then, since this recovered ammonia water is used as a part of the denitrified ammonia water for denitrifying the exhaust gas G of the main engine, it is possible to effectively use the purged fuel ammonia for the main engine as a reducing agent of the denitrification device 81 for the main engine. Thus, it is possible to reduce the cost of generating the denitrified ammonia water compared to a case of separately preparing ammonia for generating the denitrified ammonia water.

Further, in the ship 1, since the fuel ammonia can be diluted with the recovered ammonia water, the amount of water used in the fresh water tank installed in the hull 2 can be reduced when generating the denitrified ammonia water and hence the fresh water use amount can be prepared. Thus, it is possible to suppress the volume of the fresh water tank and the capacity of the water generator and to suppress an increase in size of the hull 2.

### (Other embodiments)

While the embodiment of the present disclosure has been described above with reference to the drawings, the detailed configuration is not limited to the embodiment and design changes and the like are also included in the present disclosure in the scope that does not depart from the gist of the present disclosure.

In the above-described embodiment, a case has been described in which the ammonia recovered by the ammonia recovery unit 60 is the fuel ammonia purged from the flow route R of the combustion device 8. However, the ammonia recovered by the ammonia recovery unit 60 is not limited to the fuel ammonia purged from the flow route R. The ammonia recovered by the ammonia recovery unit 60 may be the ammonia used in the ship 1.

In the above-described embodiment, a case has been described in which the combustion device 8 is a main engine that uses ammonia as fuel. However, the combustion device 8 may be a device which burns fuel and discharges the exhaust gas G and may be, for example, a combustion device which discharges the exhaust gas G by burning fuel other than ammonia or a combustion device which can switch ammonia and fuel other than the ammonia.

In the above-described embodiment, a case has been described in which the fuel ammonia of the ammonia tank 10 is supplied to the denitrified ammonia water tank 82. However, liquefied ammonia may be supplied from a tank provided separately from the ammonia tank 10 to the denitrified ammonia water tank 82.

### <Appendix>

The ship 1 described in the embodiment is understood, for example, as below.
(1) The ship 1 according to a first aspect includes: the combustion device 8 discharging the exhaust gas G with burning fuel; the ammonia recovery unit 60 recovering ammonia absorbed into water as recovered ammonia water; the recovered ammonia water tank 70 storing the recovered ammonia water recovered by the ammonia recovery unit 60; the denitrification device 81 performing a denitrification process on the exhaust gas G discharged from the combustion device 8; the denitrified ammonia water tank 82 storing the denitrified ammonia water used as a reducing agent in the denitrification device 81; and the recovered ammonia water supply line 84 supplying the recovered ammonia water of the recovered ammonia water tank 70 to the denitrified ammonia water tank 82.

Examples of the combustion device 8 include an internal combustion engine and a boiler respectively used as a main engine and a generator.

With such a configuration, the recovered ammonia water which is recovered by the ammonia recovery unit 60 can be supplied to the denitrified ammonia water tank 82 by the recovered ammonia water supply line 84. Therefore, the denitrified ammonia water is generated using the recovered ammonia water in the denitrified ammonia water tank 82 and the denitrified ammonia water of this denitrified ammonia water tank 82 can be used as a reducing agent of the denitrification device 81. Accordingly, since the recovered ammonia water can be effectively used, facilities for processing the recovered ammonia water are not required and an increase in size of the hull 2 can be suppressed while recovering the ammonia as the ammonia water.

(2) The ship 1 according to a second aspect is the ship 1 of (1) further including the ammonia tank 10 storing fuel ammonia as fuel of the combustion device 8 and the fuel ammonia supply line 85 supplying the fuel ammonia of the ammonia tank 10 to the denitrified ammonia water tank 82.

With such a configuration, it is possible to generate the denitrified ammonia water having a higher ammonia concentration than the recovered ammonia water by mixing the fuel ammonia having a higher ammonia concentration than the denitrified ammonia water with the recovered ammonia water supplied to the denitrified ammonia water tank 82.

(3) The ship 1 according to a third aspect is the ship 1 of (1) or (2), the combustion device 8 is a main engine propelling the hull 2, wherein the ship further comprises the inert gas supply device 50 supplying an inert gas to the flow route R through which the fuel for the main engine flows to purge the fuel ammonia remaining in the flow route R therefrom, and the ammonia recovery unit 60 absorbs the purged fuel ammonia into water and recovers the fuel ammonia as recovered ammonia water.

Accordingly, when the ship 1 is a so-called ammonia-fueled ship that navigates using ammonia as fuel, the fuel ammonia remaining the flow route R can be purged and recovered as recovered ammonia water by the ammonia recovery unit 60. Then, since this recovered ammonia water is used as a part of the denitrified ammonia water for denitrifying the exhaust gas G of the main engine, it is possible to effectively use the purged fuel ammonia for the main engine as a reducing agent of the denitrification device 81 for the main engine. Thus, it is possible to reduce the cost of generating the denitrified ammonia water compared to a case of separately preparing ammonia for generating the denitrified ammonia water.

### Industrial Applicability

According to the ship of the present disclosure, it is possible to suppress the recovered ammonia from being discharged to the outside of the ship and to suppress an increase in size of the hull by reusing the recovered ammonia while recovering the ammonia as the ammonia water.

### Reference Signs List

1 Ship
2 Hull
4 Superstructure
5A, 5B Side
6 Bottom
7 Upper deck
8 Combustion device
10 Ammonia tank
20 Piping system
20p Purge target region
21 Supply pipe
22 Return pipe
23, 24 Opening and closing valve
30 Vent post
38 Vent pipe
38A Upstream vent pipe
38B Downstream vent pipe
40 Ammonia buffer tank
50 Inert gas supply device
51 Inert gas supply unit
52 Inert gas supply pipe
53 Inert gas supply valve
60 Ammonia recovery unit
70 Recovered ammonia water tank
71 Recovery pipe
72 Recovery pipe opening and closing valve
80 Exhaust pipe
81 Denitrification device
82 Denitrified ammonia water tank
83 Denitrified ammonia water supply line
84 Recovered ammonia water supply line
85 Fuel ammonia supply line
85A First line
85B Second line
86 Circulation pipe
87 Stirring pump
88 Concentration meter
89 Denitrified ammonia water pump
90 Recovered ammonia water pump
91 Flow rate adjustment valve
92 Feed pump
93 Ammonia pressurizing pump
94 Ammonia heat exchanger
95 Buffer tank vent pipe
G Exhaust gas
R Flow route

## Claims

1. A ship comprising:
a combustion device discharging exhaust gas with burning fuel;
an ammonia recovery unit recovering ammonia absorbed into water as recovered ammonia water;
a recovered ammonia water tank storing the recovered ammonia water recovered by the ammonia recovery unit;
a denitrification device performing a denitrification process on the exhaust gas discharged from the combustion device;
a denitrified ammonia water tank storing denitrified ammonia water used as a reducing agent in the denitrification device; and
a recovered ammonia water supply line supplying the recovered ammonia water of the recovered ammonia water tank to the denitrified ammonia water tank.

2. The ship according to claim 1, further comprising:
an ammonia tank storing fuel ammonia as fuel of the combustion device; and
a fuel ammonia supply line supplying the fuel ammonia of the ammonia tank to the denitrified ammonia water tank.

3. The ship according to claim 2,
wherein the combustion device is a main engine propelling a hull,
wherein the ship further comprises an inert gas supply device supplying an inert gas to a flow route through which fuel for the main engine flows to purge the fuel ammonia remaining in the flow route therefrom, and
wherein the ammonia recovery unit absorbs the purged fuel ammonia into water and recovers the fuel ammonia as recovered ammonia water.
